# DEMANDE DE BREVET EUROPEEN

(11) **EP 4 763 466 A1**
(43) Date de publication de la demande: **24.06.2026**
(21) Numéro de dépôt: 25223883.7
(22) Date de dépôt: 16.12.2025
(51) Int. Cl.: B29C 45/00, B29L 31/56

(54) **SYSTÈME D EMBOÎTEMENT DE DEUX PIÈCES OÙ LE SYSTÈME D EMBOÎTEMENT COMPORTE DEUX COULISSEAUX**

(30) Priorité: 19.12.2024 FR 2414659
(71) Demandeur: ERMO, 53440 Marcille-la-Ville (FR)
(72) Inventeur: LASCOUP, Bertrand, 53440 MARCILLE-LA-VILLE (FR); DEL NEVO, Maurizio, 53440 MARCILLE-LA-VILLE (FR)
(74) Mandataire: Cabinet Le Guen Maillet

(57) **Abrégé**

L'invention concerne un système d'emboîtement (200) de deux pièces (50a-b) comportant un châssis (202), pour chaque extrémité (204a-b) d'une barre d'emboîtement (204), deux bielles (210a-b), où chacune présente une extrémité distale (212b) au niveau de laquelle ladite extrémité (204a-b) est montée libre en rotation, pour les deux premières bielles (210a), un premier coulisseau (214) mobile en translation sur le châssis (202) et où les extrémités proximales (212a) desdites deux premières bielles (210a) sont montées libres en rotation autour d'un premier axe (218a), pour les deux deuxièmes bielles (210b), un deuxième coulisseau (216) mobile en translation sur le châssis (202) et où les extrémités proximales (212a) desdites deux deuxièmes bielles (210b) sont montées libres en rotation, pour chaque coulisseau (214, 216), un actionneur (220, 222) pour déplacer ledit coulisseau (214, 216), et une unité de contrôle (80) arrangée pour commander chaque actionneur (220, 222).

## Description

### DOMAINE TECHNIQUE

La présente invention concerne un système d'emboîtement de deux pièces, où le système d'emboîtement comporte une barre d'emboîtement dont le déplacement est commandé par deux coulisseaux montés mobiles en translation, ainsi qu'une machine de moulage comportant un tel système d'emboîtement.

### ÉTAT DE LA TECHNIQUE ANTÉRIEURE

Un capuchon du type capuchon pour une bouteille contenant un produit liquide comme du shampoing, de l'après-shampoing, du produit vaisselle ou autres, comporte généralement un corps et un opercule. Le corps est destiné à s'emboîter sur la bouteille et l'opercule est destiné à être manœuvré d'une position de fermeture vers une position d'ouverture et vice-versa pour permettre la retenue du produit dans la bouteille ou son écoulement hors de la bouteille.

De tels capuchons peuvent être également utilisés dans d'autres secteurs comme par exemple, l'automobile ou dans le domaine médical.

Le corps et l'opercule sont moulés ensemble et sont reliés l'un à l'autre par une charnière qui permet de déplacer l'opercule par rapport au corps.

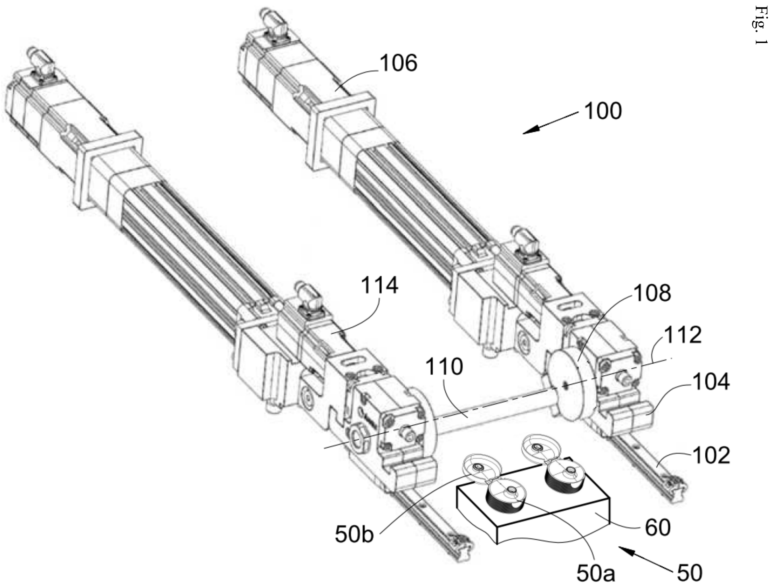

La Fig. 1 montre deux capuchons 50, où chacun comporte un corps 50a et un opercule 50b articulé sur le corps 50a.

Classiquement, le corps 50a et l'opercule 50b sont moulés dans une machine de moulage entre deux mâchoires qui présentent des évidements et des reliefs, et qui viennent l'une contre l'autre pour former des cavités, où le corps 50a et l'opercule 50b seront moulés.

La Fig. 1 montre une des mâchoires 60 sur laquelle les corps 50a sont maintenus.

La Fig. 1 montre également un système d'emboîtement 100 de l'état de la technique qui assure le basculement de chaque capuchon 50b et son emboîtement sur le corps 50a associé.

Le système d'emboîtement 100 comporte deux rails de guidage 102 parallèles et pour chaque rail de guidage 102, un chariot 104 mobile en translation sur le rail de guidage 102.

Pour chaque chariot 104, le système d'emboîtement 100 comporte un premier moyen d'entraînement 106, typiquement un moteur avec une vis à billes, qui assure le déplacement en translation du chariot 104 le long du rail de guidage 102. Les deux chariots 104 sont en face l'un de l'autre et se déplacent de manière synchronisée.

Chaque chariot 104 porte un bras de levier 108, ici sous forme d'une roue, qui est monté mobile en rotation sur le chariot 104 autour d'un axe de rotation 112. Les axes des bras de levier 108 des deux chariots 104 sont coaxiaux et, pour chaque chariot 104, le système d'emboîtement 100 comporte un deuxième moyen d'entraînement 114, typiquement un moteur, qui assure le déplacement en rotation du bras de levier 108 du chariot 104.

Le système d'emboîtement 100 comporte également une barre d'emboîtement 110 qui est montée entre les deux roues 108 et de manière désaxée par rapport à l'axe de rotation 112.

Le fonctionnement du système d'emboîtement 100 est alors le suivant. Après moulage, les capuchons 50 se présentent entre les rails 102 et sont toujours fixés ici sur la mâchoire 60. Les chariots 104 sont déplacés en translation le long des rails 102 de manière à amener la barre d'emboîtement 110 sous les opercules 50b. Les bras de levier 108 sont déplacés en rotation de manière à faire pivoter les opercules 50b sous l'action de la barre d'emboîtement 110 et dans le même temps, les chariots 104 sont déplacés en translation le long des rails 102 pour que la barre d'emboîtement 110 appuie sur chaque opercule 50b pour l'emboîter sur le corps 50a associé.

Le document WO-A-2019/053292 divulgue un système de l'état de la technique.

Bien qu'un tel système d'emboîtement donne de bons résultats, il nécessite de nombreuses pièces en mouvement comme des crémaillères, des pignons, des renvois mécaniques, etc. Il est donc souhaitable de trouver un arrangement plus simple.

### EXPOSÉ DE L'INVENTION

Un objet de la présente invention est de proposer un système d'emboîtement qui permet de réaliser un emboîtement de l'opercule sur le corps avec un système mécanique simplifié.

À cet effet, est proposé un système destiné à emboîter une deuxième pièce sur une première pièce, ledit système d'emboîtement comportant :
- un châssis,
- une barre d'emboîtement destinée à venir en appui contre la deuxième pièce pour la déplacer et pour l'emboîter sur la première pièce et s'étendant parallèlement à un axe d'actionnement entre deux extrémités,
- pour chaque extrémité, une première bielle et une deuxième bielle, où chaque bielle présente une extrémité proximale et une extrémité distale au niveau de laquelle ladite extrémité est montée libre en rotation autour de l'axe d'actionnement,
- pour les deux premières bielles, un premier coulisseau monté mobile en translation sur le châssis parallèlement à une direction de translation et où les extrémités proximales desdites deux premières bielles sont montées libres en rotation autour d'un premier axe parallèle à l'axe d'actionnement,
- pour les deux deuxièmes bielles, un deuxième coulisseau monté mobile en translation par rapport au premier coulisseau parallèlement à la direction de translation et où les extrémités proximales desdites deux deuxièmes bielles sont montées libres en rotation autour d'un deuxième axe parallèle à l'axe d'actionnement,
- pour chaque coulisseau, un actionneur arrangé pour déplacer ledit coulisseau en translation, et
- une unité de contrôle arrangée pour commander chaque actionneur.

L'utilisation de simples translations facilite le mécanisme.

Avantageusement, le système d'emboîtement comporte un plan médian perpendiculaire à l'axe d'actionnement, de part et d'autre duquel, il y a une première bielle et une deuxième bielle.

Avantageusement, les deux premières bielles sont disposées à l'extérieur des deux deuxièmes bielles.

Selon un mode de réalisation particulier, le deuxième coulisseau est monté mobile en translation sur le châssis.

Selon un mode de réalisation particulier, le deuxième coulisseau est monté mobile en translation sur le premier coulisseau.

Avantageusement, pour chaque extrémité proximale, le coulisseau associé comporte deux barres entre lesquelles ladite extrémité proximale est montée mobile en rotation. L'invention propose également une machine de moulage comportant des moyens de moulage pour mouler une première pièce et une deuxième pièce et un système d'emboîtement selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en perspective d'un système d'emboîtement de l'état de la technique,
Fig. 2 est une vue en perspective d'un système d'emboîtement selon un premier mode de réalisation de l'invention,
Fig. 3 est une vue de côté du système d'emboîtement selon l'invention, et
Fig. 4 est une vue en perspective d'un système d'emboîtement selon un deuxième mode de réalisation de l'invention.

### EXPOSÉ DÉTAILLÉ DE MODES DE RÉALISATION

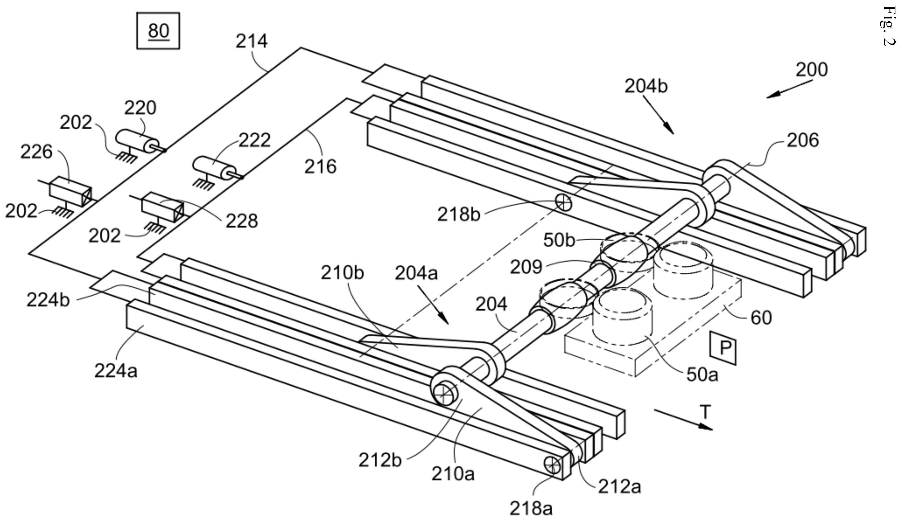

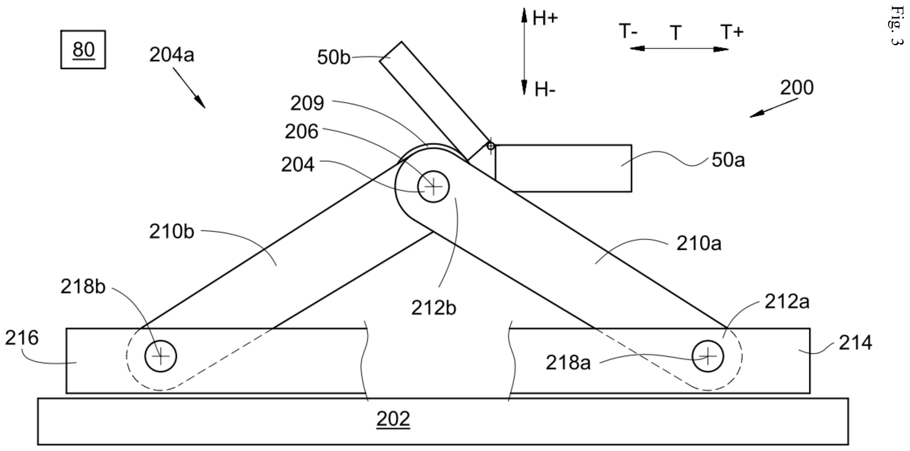

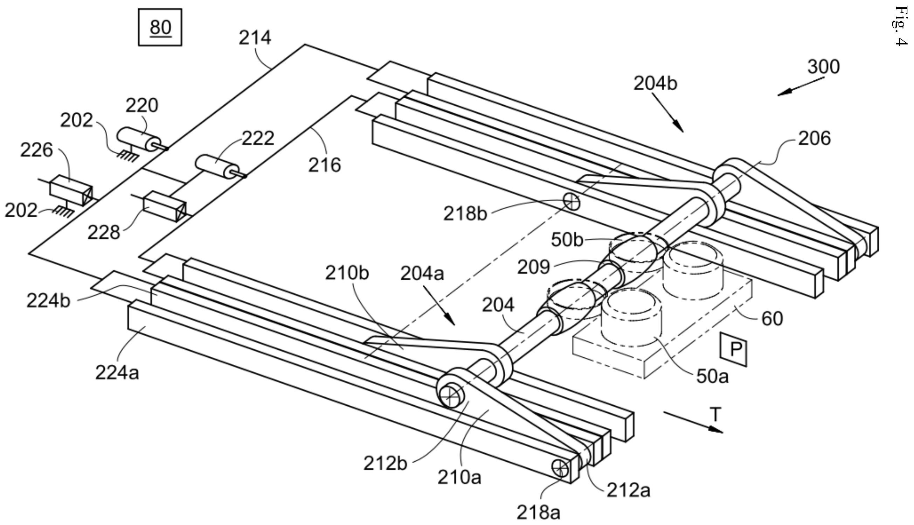

La Fig. 2 montre un système d'emboîtement 200 selon un premier mode de réalisation de l'invention, la Fig. 4 montre un système d'emboîtement 300 selon un deuxième mode de réalisation de l'invention, et la Fig. 3 est une vue de côté qui s'applique aux deux modes de réalisation.

Le système d'emboîtement 200, 300 peut être mis en œuvre dans une machine de moulage qui comporte des moyens de moulage tels que des mâchoires.

Les moyens de moulage comportent classiquement des mâchoires (dont une seule 60 est représentée) qui sont conformées pour réaliser le moulage d'une première pièce 50a et d'une deuxième pièce 50b solidaires l'une de l'autre par une charnière moulée en même temps que les pièces 50a et 50b. Dans le mode de réalisation de l'invention présenté ici, la première pièce 50a est un corps 50a d'un capuchon 50 et la deuxième pièce 50b est un opercule 50b du même capuchon 50 articulé sur le corps 50a.

D'une manière générale, le système d'emboîtement 200, 300 assure le déplacement en rotation de la deuxième pièce 50b et l'emboîtement de cette dernière sur la première pièce 50a et il comporte un châssis 202 qui peut être un châssis indépendant ou une partie de la machine de moulage.

Le système d'emboîtement 200, 300 comporte également une barre d'emboîtement 204 qui est arrangée pour venir en appui contre la deuxième pièce 50b pour la déplacer et l'emboîter sur la première pièce 50a. Comme cela est décrit ci-dessous, la barre d'emboîtement 204 se positionne d'abord sous la deuxième pièce 50b, puis la fait pivoter autour de la charnière et enfin passe au-dessus de la deuxième pièce 50b pour l'emboîter sur la première pièce 50a.

La barre d'emboîtement 204 s'étend parallèlement à un axe d'actionnement 206 entre ses deux extrémités 204a-b. Dans le mode de réalisation de l'invention présenté ici, la barre d'emboîtement 204 porte des molettes 209 qui sont préférentiellement montées libres en rotation sur la barre d'emboîtement 204 autour de l'axe d'actionnement 206 et le contact entre la barre d'emboîtement 204 et la deuxième pièce 50b s'effectue à travers les molettes 209. Pour chaque extrémité 204a-b de la barre d'emboîtement 204, le système d'emboîtement 200, 300 comporte une première bielle 210a et une deuxième bielle 210b. Chacune de ces bielles 210a-b présente une extrémité proximale 212a et une extrémité distale 212b au niveau de laquelle l'extrémité 204a-b considérée est montée libre en rotation autour de l'axe d'actionnement 206. Ainsi, la barre d'emboîtement 204 est libre de tourner sur elle-même par rapport aux premières bielles 210a.

Pour les deux premières bielles 210a, le système d'emboîtement 200, 300 comporte un premier coulisseau 214 qui est monté mobile en translation sur le châssis 202. Sur les Figs. 2 à 4, le premier coulisseau 214 est représenté schématiquement et il peut prendre toutes les formes envisageables par un homme du métier. La liaison glissière entre le châssis 202 et le premier coulisseau 214 est représentée par le symbole référencé 226. La liaison glissière peut prendre toutes les formes envisageables par un homme du métier, comme par exemple la combinaison de rainures et de nervures.

Les extrémités proximales 212a des deux premières bielles 210a sont montées libres en rotation sur le premier coulisseau 214 autour d'un même premier axe 218a parallèle à l'axe d'actionnement 206.

De la même manière, pour les deux deuxièmes bielles 210b, le système d'emboîtement 200, 300 comporte un deuxième coulisseau 216 qui est monté mobile en translation par rapport au premier coulisseau 214, c'est-à-dire que les deux coulisseaux 214 et 216 se déplacent l'un par rapport à l'autre.

Dans le premier mode de réalisation de l'invention, le deuxième coulisseau 216 est monté mobile sur le châssis 202, et dans le deuxième mode de réalisation de l'invention, il est monté mobile sur le premier coulisseau 214.

Les deux coulisseaux 214 et 216 sont mobiles en translation parallèlement à la même direction de translation T qui est perpendiculaire à l'axe d'actionnement 206.

Le deuxième mode de réalisation permet de limiter la longueur de débattement parallèlement à la direction de translation T.

Comme précédemment, sur les Figs. 2 à 4, le deuxième coulisseau 216 est représenté schématiquement et il peut prendre toutes les formes envisageables par un homme du métier. La liaison glissière entre le deuxième coulisseau 216 et le châssis 202 ou le premier coulisseau 214 est représentée par le symbole référencé 228. La liaison glissière peut prendre toutes les formes envisageables par un homme du métier, comme par exemple la combinaison de rainures et de nervures.

Les extrémités proximales 212a des deux deuxièmes bielles 210b sont montées libres en rotation sur le deuxième coulisseau 216 autour d'un même deuxième axe 218b parallèle à l'axe d'actionnement 206.

La direction de translation T correspond à la direction des liaisons glissières 226 et 228.

Comme représenté aux Figs. 2 et 4, il y a ainsi une première bielle 210a et une deuxième bielle 210b à gauche et une à droite par rapport à la barre d'emboîtement 204.

Pour chaque coulisseau 214, 216, le système d'emboîtement 200, 300 comporte un actionneur 220, 222 arrangé pour déplacer le coulisseau 214, 216 correspondant en translation le long du châssis 202 ou le long du premier coulisseau 214 dans un sens ou dans l'autre parallèlement à la direction de translation T (T+/T-). Chaque actionneur 220, 222 est un actionneur linéaire comme un vérin électrique, hydraulique, ou autre.

Le système d'emboîtement 200, 300 comporte également une unité de contrôle 80 arrangée pour commander chaque actionneur 220, 222. Pour assurer un déplacement approprié de la barre d'emboîtement 204, les actionneurs 220 et 222 sont commandés de manière appropriée afin que les mouvements des bielles 210a-b assurent la fonction demandée.

Le simple actionnement des actionneurs 220 et 222 selon des trajectoires linéaires permet de déplacer la barre d'emboîtement 204 pour l'amener à déplacer la deuxième pièce 50b et l'emboîter sur la première pièce 50a. La mécanique mise en œuvre est donc plus simple que dans le cas de l'état de la technique.

En fonction des déplacements relatifs entre les premières bielles 210a et les deuxièmes bielles 210b, il est possible de faire prendre toutes les positions souhaitées à la barre d'emboîtement 204. Ainsi, sur la Fig. 3, en rapprochant les extrémités proximales 212a des premières 210a et deuxièmes 210b bielles, la barre d'emboîtement 204 va se soulever H+ et à l'inverse, en éloignant les extrémités proximales 212a des premières 210a et deuxièmes 210b bielles, la barre d'emboîtement 204 va s'abaisser H-. En déplaçant les extrémités proximales 212a des premières 210a et deuxièmes 210b bielles selon une même direction T+/T-, la barre d'emboîtement 204 va se déplacer dans la même direction. En combinant ces différents déplacements, il est possible de donner à la barre d'emboîtement 204 tous les mouvements possibles.

Ici, chaque coulisseau 214, 216 a été considéré comme un coulisseau unique, mais il est possible que chaque coulisseau soit en fait constitué des deux sous-coulisseaux, à savoir un par paire d'une première bielle 210a et d'une deuxième bielle 210b et que chaque sous-coulisseau est commandé en translation par son propre actionneur, les deux actionneurs se déplaçant ensemble.

Les bielles 210a-b sont dans des plans perpendiculaires à l'axe d'actionnement 206.

Pour des raisons d'équilibrage, le système d'emboîtement 200, 300 comporte un plan médian P perpendiculaire à l'axe d'actionnement 206 et de part et d'autre de ce plan médian P, il y a une première bielle 210a et une deuxième bielle 210b. C'est-à-dire que d'un côté du plan médian P, il y a une première paire avec une première bielle 210a et une deuxième bielle 210b et de l'autre côté du plan médian P, il y a une deuxième paire avec une autre première bielle 210a et une autre deuxième bielle 210b. Les pièces à emboîter 50a-b sont entre ces deux paires.

Ici, les deux premières bielles 210a sont disposées à l'extérieur des deux deuxièmes bielles 210b.

Dans le mode de réalisation de l'invention représenté aux Figs. 2 et 4, pour chaque extrémité proximale 212a, il y a deux barres 224a-b qui sont solidaires du coulisseau 214, 216 correspondant. Ces deux barres 224a-b sont disposées parallèlement l'une à l'autre et perpendiculairement à l'axe d'actionnement 206. Ces deux barres 224a-b sont distantes l'une de l'autre et l'extrémité proximale 212a associée est disposée entre ces deux barres 224a-b et un arbre de rotation correspondant à l'axe 218a-b associé est monté également entre ces deux barres 224a-b. L'extrémité proximale 212a est montée mobile en rotation sur l'arbre de rotation entre les barres 224a-b associées.

Selon un mode de réalisation particulier, l'unité de contrôle 80 comporte, reliés par un bus de communication: un processeur ou CPU (« Central Processing Unit » en anglais) ; une mémoire vive RAM (« Read Access Memory » en anglais) ; une mémoire morte, par exemple de type ROM (« Read Only Memory » en anglais) ou EEPROM (« Electrically-Erasable Programmable ROM » en anglais) ou de type Flash ; une unité de stockage, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces I/f.

Le gestionnaire d'interfaces I/f permet à l'unité de contrôle 80 de communiquer avec, entre autres, les actionneurs.

Le processeur est capable d'exécuter des instructions chargées dans la mémoire vive à partir de la mémoire morte, d'une mémoire externe, d'un support de stockage (tel qu'une carte SD), ou d'un réseau de communication. Lorsque la plateforme matérielle est mise sous tension, le processeur est capable de lire de la mémoire vive des instructions et de les exécuter. Ces instructions forment un programme d'ordinateur causant l'implémentation, par le processeur, de tout ou partie des étapes et fonctionnements décrits ici.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, l'unité de contrôle 80 comporte de la circuiterie électronique adaptée et configurée pour implémenter les fonctionnements et étapes décrits ici.

## Revendications

1. Système d'emboîtement (200, 300) destiné à emboîter une deuxième pièce (50b) sur une première pièce (50a), ledit système d'emboîtement (200) comportant :
- un châssis (202),
- une barre d'emboîtement (204) destinée à venir en appui contre la deuxième pièce (50b) pour la déplacer et pour l'emboîter sur la première pièce (50a) et s'étendant parallèlement à un axe d'actionnement (206) entre deux extrémités (204a-b),
- pour chaque extrémité (204a-b), une première bielle (210a) et une deuxième bielle (210b), où chaque bielle (210a-b) présente une extrémité proximale (212a) et une extrémité distale (212b) au niveau de laquelle ladite extrémité (204a-b) est montée libre en rotation autour de l'axe d'actionnement (206),
- pour les deux premières bielles (210a), un premier coulisseau (214) monté mobile en translation sur le châssis (202) parallèlement à une direction de translation (T) et où les extrémités proximales (212a) desdites deux premières bielles (210a) sont montées libres en rotation autour d'un premier axe (218a) parallèle à l'axe d'actionnement (206),
- pour les deux deuxièmes bielles (210b), un deuxième coulisseau (216) monté mobile en translation par rapport au premier coulisseau (214) parallèlement à la direction de translation (T) et où les extrémités proximales (212a) desdites deux deuxièmes bielles (210b) sont montées libres en rotation autour d'un deuxième axe (218b) parallèle à l'axe d'actionnement (206),
- pour chaque coulisseau (214, 216), un actionneur (220, 222) arrangé pour déplacer ledit coulisseau (214, 216) en translation, et
- une unité de contrôle (80) arrangée pour commander chaque actionneur (220, 222).

2. Système d'emboîtement (200, 300) selon la revendication 1, **caractérisé en ce qu'**il comporte un plan médian (P) perpendiculaire à l'axe d'actionnement (206), de part et d'autre duquel, il y a une première bielle (210a) et une deuxième bielle (210b).

3. Système d'emboîtement (200, 300) selon la revendication 2, **caractérisé en ce que** les deux premières bielles (210a) sont disposées à l'extérieur des deux deuxièmes bielles (210b).

4. Système d'emboîtement (200) selon l'une des revendications 1 à 3, **caractérisé en ce que** le deuxième coulisseau (216) est monté mobile en translation sur le châssis (202).

5. Système d'emboîtement (300) selon l'une des revendications 1 à 3, **caractérisé en ce que** le deuxième coulisseau (216) est monté mobile en translation sur le premier coulisseau (214).

6. Système d'emboîtement (200, 300) selon l'une des revendications 1 à 5, **caractérisé en ce que** pour chaque extrémité proximale (212a), le coulisseau (214, 216) associé comporte deux barres (224a-b) entre lesquelles ladite extrémité proximale (212a) est montée mobile en rotation.

7. Machine de moulage comportant des moyens de moulage (60) pour mouler une première pièce (50a) et une deuxième pièce (50b) et un système d'emboîtement (200, 300) selon l'une des revendications précédentes.
